# DEMANDE DE BREVET EUROPEEN

(11) **EP 0 777 367 A1**
(43) Date de publication de la demande: **04.06.1997**
(21) Numéro de dépôt: 96410118.2
(22) Date de dépôt: 22.11.1996
(51) Int. Cl.: H04L 25/49, H04L 25/03

(54) **Circuit de suppression de dispersion dans une transmission de données**

(30) Priorité: 30.11.1995 FR 9514383
(71) Demandeur: SGS-THOMSON MICROELECTRONICS S.A., 94250 Gentilly (FR)
(72) Inventeur: Burgard, Francine, 38000 Grenoble (FR)
(74) Mandataire: de Beaumont, Michel

(57) **Abrégé**

L'invention concerne un circuit (18') de suppression de dispersion dans une transmission d'un paquet de données, comprenant un compteur polynomial (26) fournissant, à la cadence de transmission (CK) des bits (b) du paquet, des bits de correction (c) à combiner respectivement aux bits du paquet par OU-exclusif (30). Les bits de correction sont fournis à un convertisseur série-parallèle (28) dont la sortie (C) est combinée aux mots successifs transmis en parallèle du paquet.

## Description

La présente invention concerne une chaîne de traitement de données, destinée à réduire le nombre d'erreurs dans une transmission. L'invention concerne plus particulièrement l'un des éléments de la chaîne, qui est un circuit de suppression de dispersion aussi appelé circuit de "débrouillage".

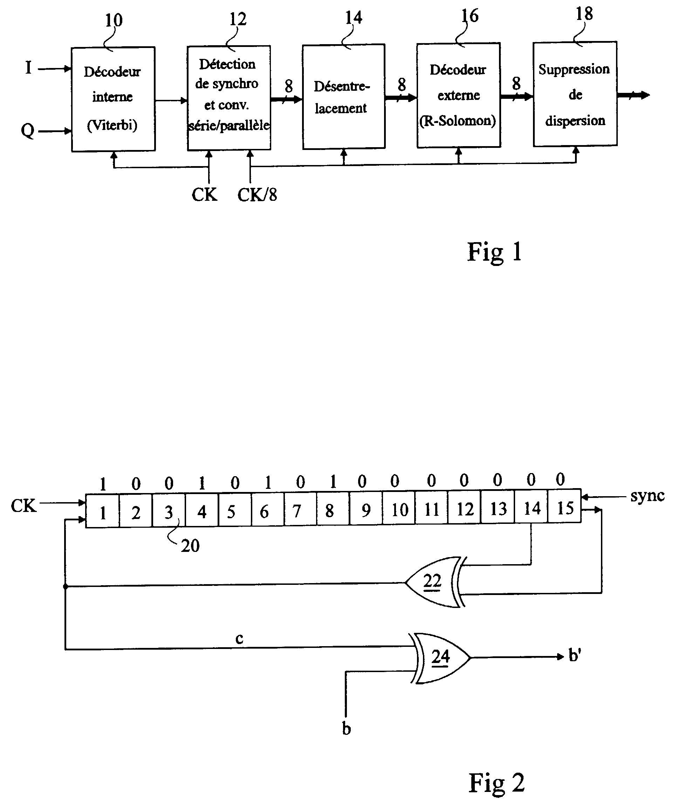

La figure 1 représente un exemple de chaîne de traitement utilisée au niveau d'un récepteur conforme à la norme européenne de transmission de signaux de télévision numérique par satellite. Selon cette norme, les données numériques sont transmises par paquets d'octets, généralement des paquets de 204 octets dont 16 octets sont redondants et servent à une correction d'erreur. Les limites des paquets sont déterminées par des codes de synchronisation.

Chaque paquet subit à l'émission une dispersion ou "brouillage" qui sert à réduire le spectre de fréquence du signal de transmission afin de faciliter son traitement. La dispersion consiste à combiner les bits de chaque paquet par OU-exclusif avec des bits correspondants fournis par un compteur polynomial initialisé à une valeur adéquate.

Chaque paquet subit également un codage externe (codage Reed-Solomon) qui génère les octets redondants susmentionnés pour pouvoir corriger plusieurs erreurs dans chaque paquet.

Les octets de chaque paquet sont entrelacés afin de pouvoir mieux corriger des salves d'erreurs consécutives. En effet, si plusieurs erreurs consécutives se produisent dans la transmission, lorsque les données auront été désentrelacées, les erreurs de cette salve se trouveront à des emplacements isolés et sont donc plus faciles à corriger.

Finalement, les bits à transmettre subissent un codage interne (codage convolutif) pour créer deux signaux de transmission redondants I et Q qui serviront également à réduire le nombre d'erreurs.

La figure 1 représente une partie de l'architecture selon la norme européenne susmentionnée de la chaîne de traitement inverse des signaux I et Q, à la réception. En 10, les signaux I et Q reçus subissent un décodage interne (utilisant l'algorithme de Viterbi). En 12, dans le signal série produit par le décodeur 10, on détecte des mots de synchronisation servant à délimiter les paquets et on effectue une conversion série-parallèle pour fournir des octets. Dans des blocs consécutifs 14, 16 et 18, on effectue respectivement le désentrelacement, le décodage externe, et la suppression de dispersion.

On remarque que l'architecture de la figure 1 fonctionne à deux fréquences différentes. Une première partie, c'est-à-dire le circuit de décodage interne 10 et une partie du circuit 12 de synchronisation et de conversion série-parallèle, sont cadencées par une horloge rapide CK à la fréquence de transmission des bits, tandis que le reste de l'architecture est cadencé par une horloge plus lente CK/8 à la fréquence de transmission des octets.

Généralement, la fréquence de transmission des bits est à la limite de ce que l'on peut obtenir avec les technologies courantes. Ainsi, les circuits qui fonctionnent à cette fréquence doivent être réalisés avec un soin particulier pour minimiser les retards de front d'horloge et pour compenser ces retards afin de contourner des problèmes de synchronisation. On ne rencontre pas ces problèmes dans les autres circuits fonctionnant à fréquence plus basse (CK/8).

La figure 2 représente un circuit classique de suppression de dispersion. Ce circuit comprend un compteur polynomial constitué d'un registre à décalage 20 dont l'entrée reçoit une combinaison par OU-exclusif 22 de la sortie du registre à décalage et d'une ou plusieurs bascules intermédiaires de ce registre à décalage. Le registre à décalage 20 est cadencé par l'horloge bit CK et reçoit une valeur initiale au début de chaque groupe de huit paquets à traiter. Le début du groupe de paquets est déterminé par un signal de synchronisation de groupe SYNC. Dans le cadre de la norme européenne susmentionnée, le registre à décalage 20 comporte quinze bascules et l'entrée du registre reçoit la combinaison par OU-exclusif des sorties des dernière et avant dernière bascules. La valeur d'initialisation est 100101010000000.

La sortie de la porte OU-exclusif 22, constituant la sortie du compteur polynomial, fournit des bits de correction c à une première entrée d'une porte OU-exclusif 24, à la cadence de transmission des bits. Les bits b des paquets "brouillés" sont fournis à une deuxième entrée de la porte 24. La sortie de cette porte 24 fournit les bits b' des paquets "débrouillés".

Le circuit de la figure 2, particulièrement simple, est destiné à fonctionner sur une transmission série de bits b. Or, le circuit de suppression de dispersion 18 de l'architecture de la figure 1 doit travailler sur une transmission parallèle d'octets. Pour cela, deux solutions pourraient être envisagées.

Une première solution consiste à utiliser une arithmétique parallèle opérant sur des octets. Le circuit résultant, de structure parallèle, serait complexe et occuperait une surface notable par rapport au circuit série de la figure 2.

Une deuxième solution consiste à effectuer une conversion parallèle-série à la sortie du décodeur externe 16 afin de pouvoir utiliser en 18 le circuit série de la figure 2, puis à reconvertir en parallèle les bits fournis en série par le circuit de la figure 2. Si la vitesse de transmission des bits était lente, cette solution serait nettement moins complexe que la première solution susmentionnée. Toutefois, il est toujours délicat, dans un circuit quelconque, de passer d'une fréquence de fonctionnement basse (à la sortie parallèle du décodeur externe 16) à une fréquence de fonctionnement élevée (à l'entrée série du circuit de la figure 2). La fréquence élevée du circuit de la figure 2 doit être synchronisée sur la fréquence plus basse du décodeur 16. Cette synchronisation ne pose pas de problème particulier si la fréquence élevée est loin des limites technologiques. Toutefois, si cette fréquence élevée est à la limite de ce qu'accepte la technologie, la synchronisation devient particulièrement délicate et nécessite l'emploi de solutions complexes. De plus, les solutions de synchronisation qui fonctionneront bien dans une certaine technologie ne fonctionneront pas nécessairement dans une autre technologie.

Par contre, une conversion série-parallèle, telle qu'effectuée en 12 à la figure 1, ne pose aucun problème.

Un objet de la présente invention est de prévoir un circuit de suppression de dispersion fonctionnant en parallèle qui soit de structure particulièrement simple et qui puisse fonctionner à la fréquence limite de la technologie employée.

Pour atteindre cet objet, la présente invention prévoit d'effectuer une conversion série-parallèle des bits de correction fournis par un compteur polynomial série. Les bits de correction sont donc fournis par octets par le convertisseur série-parallèle et peuvent être combinés aux octets du paquet par huit portes OU-exclusif.

Avec cette configuration, on évite le passage d'une fréquence basse à une fréquence élevée (comme dans un convertisseur parallèle-série), qui pose des problèmes de synchronisation.

La présente invention prévoit plus particulièrement un circuit de suppression de dispersion dans une transmission d'un paquet de données, comprenant un compteur polynomial fournissant, à la cadence de transmission des bits du paquet, des bits de correction à combiner respectivement aux bits du paquet par OU-exclusif. Les bits de correction sont fournis à un convertisseur série-parallèle dont la sortie est combinée aux mots successifs transmis en parallèle du paquet.

Selon un mode de réalisation de l'invention, le compteur polynomial est initialisé au début d'un paquet.

Selon un mode de réalisation de l'invention, le circuit de suppression de dispersion est utilisé dans une chaîne de traitement du paquet en aval d'une détection de mot de synchronisation du paquet et d'une conversion série-parallèle de la transmission des bits du paquet, le compteur polynomial recevant un signal d'initialisation retardé, par rapport à une détection de synchronisation, du décalage entre une détection de synchronisation et l'apparition du début d'un paquet à l'entrée du circuit de suppression.

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :
les figures 1 et 2, précédemment décrites, illustrent l'état de la technique et le problème que vise à résoudre la présente invention ;
la figure 3 représente une architecture d'une chaîne de traitement de données classique dans laquelle est incorporé un circuit de suppression de dispersion selon la présente invention ; et
la figure 4 représente un mode de réalisation détaillé d'un circuit de suppression de dispersion selon la présente invention.

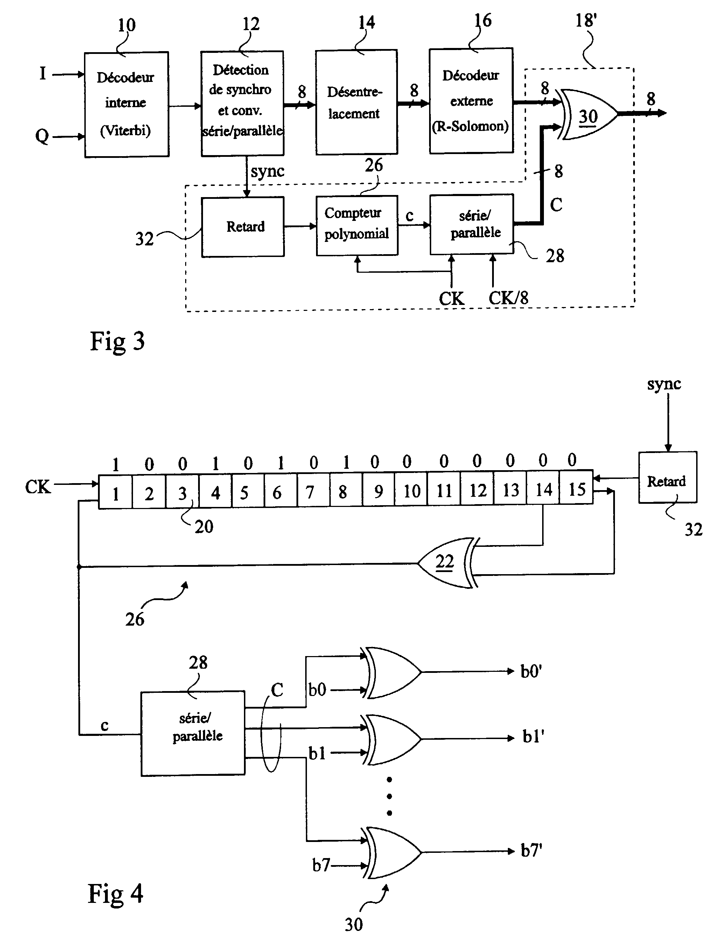

La figure 3 représente une chaîne de traitement de données qui comprend des mêmes éléments que celle de la figure 1, désignés par des mêmes références. Les octets sortant du décodeur externe 16 sont fournis à un circuit de suppression de dispersion 18' selon la présente invention. Ce circuit de suppression de dispersion 18' comprend un compteur polynomial série 26, du type de celui de la figure 2, fournissant des bits de correction c à la fréquence de transmission des bits (CK). Ces bits de correction c sont fournis à un convertisseur série-parallèle 28 qui reconstitue, à partir des bits c, des octets de correction C à la cadence (CK/8) des octets fournis par le décodeur 16. Ces octets de correction C sont combinés par OU-exclusif en 30 aux octets sortant du décodeur 16. Les octets "débrouillés" sont constitués par les résultats de ces combinaisons en 30.

Bien entendu, le compteur polynomial 26 doit être initialisé en synchronisme avec l'arrivée à la sortie du décodeur externe 16 des débuts de paquet. Les débuts de paquet sont détectés par le détecteur de synchronisation 12 qui active un signal SYNC à chaque détection d'un mot de synchronisation définissant un début de paquet. Ce signal SYNC est utilisé pour initialiser le compteur polynomial 26, et lui est fourni par l'intermédiaire d'un circuit 32 qui retarde le signal SYNC de manière à initialiser le compteur polynomial 26 en correspondance avec l'apparition du début d'un groupe de huit paquets à la sortie du décodeur externe 16. Lorsque le premier octet d'un paquet apparaît à la sortie du décodeur 16, le convertisseur série-parallèle 28 doit fournir l'octet de correction C correspondant. Pour cela, le compteur polynomial 26 doit avoir été initialisé huit cycles de l'horloge bit CK plus tôt.

Un circuit parallèle de suppression de dispersion selon la présente invention occupe une surface comparable à celle occupée par le circuit série de la figure 2. De plus, on n'utilise pas de convertisseur parallèle-série qui, comme cela a été expliqué précédemment, présente d'énormes problèmes liés au fait du passage d'une fréquence lente (fréquence octet) à une fréquence rapide (fréquence bit) à la limite de ce qu'accepte la technologie employée.

Généralement, pour synchroniser les divers circuits de l'architecture de la figure 1, on prévoit une base de temps qui comporte un compteur de paquets initialisé par le circuit de synchronisation 12 à chaque début d'un groupe de huit paquets, et un compteur d'octets initialisé par le circuit de synchronisation 12 à chaque début d'un paquet. Ainsi, le compteur de paquets indique le rang d'un paquet courant dans le groupe courant, et le compteur d'octets indique le rang d'un octet courant dans le paquet courant (un octet courant étant celui qui est fourni par le convertisseur série-parallèle 12).

On obtient alors le retard 32 en attendant que les compteurs de paquets et d'octets atteignent des valeurs correspondantes.

Dans le cadre de la norme européenne susmentionnée, les paquets à traiter comportent 204 octets et le retard introduit par les blocs 14 et 16 est de 1157 octets. Dans cet exemple, le compteur polynomial 28 est initialisé quand les compteurs de paquets et d'octets atteignent respectivement la valeur 5 et la valeur 136.

La figure 4 représente un mode de réalisation détaillé du circuit de suppression de dispersion 18'. Le compteur polynomial 26, comportant un registre à décalage 20 et une porte OU-exclusif 22, est identique à celui de la figure 2. Le registre à décalage 20 est cadencé par l'horloge bit CK et il est initialisé par l'intermédiaire du circuit de retard 32. La sortie de la porte OU-exclusif 22, délivrant en série des bits de correction c, est fournie au convertisseur série-parallèle 28. Chacune de huit portes OU-exclusif 30 reçoit un bit correspondant b des octets "brouillés" et un bit correspondant de l'octet de correction C fourni par le convertisseur série parallèle 28. Les sorties des portes OU-exclusif 30 fournissent les bits b' de chacun des octets "débrouillés".

La présente invention a été décrite dans le cadre du traitement d'une transmission selon une norme particulière, mais il est clair que le circuit de suppression de dispersion selon l'invention s'applique à toute chaîne de traitement parallèle.

## Revendications

1. Circuit (18') de suppression de dispersion dans une transmission d'un paquet de données, comprenant un compteur polynomial (26) fournissant, à la cadence de transmission (CK) des bits (b) du paquet, des bits de correction (c) à combiner respectivement aux bits du paquet par OU-exclusif (30), caractérisé en ce que les bits de correction sont fournis à un convertisseur série-parallèle (28) dont la sortie (C) est combinée aux mots successifs transmis en parallèle du paquet.

2. Circuit de suppression de dispersion selon la revendication 1, caractérisé en ce que le compteur polynomial (28) est initialisé au début d'un paquet.

3. Circuit de suppression de dispersion selon la revendication 2, caractérisé en ce qu'il est utilisé dans une chaîne de traitement du paquet en aval d'une détection de mot de synchronisation du paquet et d'une conversion série-parallèle (12) de la transmission des bits du paquet, le compteur polynomial (26) recevant un signal d'initialisation retardé, par rapport à une détection de synchronisation (SYNC), du décalage entre une détection de synchronisation et l'apparition du début d'un paquet à l'entrée du circuit de suppression (18').
